# EUROPEAN PATENT SPECIFICATION

(11) **EP 1 565 684 B1**
(45) Date of publication and mention of the grant of the patent: **21.03.2007**
(21) Application number: 03777482.5
(22) Date of filing: 24.11.2003
(51) Int. Cl.: F16L 21/08

(54) **PIPE COUPLING**
ROHRKUPPLUNG
COUPLEUR DE TUBES

(30) Priority: 27.11.2002 NL 1022008
(43) Date of publication of application: 24.08.2005
(73) Proprietor: ASCO CONTROLS B.V., 3925 BD Scherpenzeel (NL)
(72) Inventor: OOMEN, Tjerk, NL-3925 Scherpenzeel (NL)
(74) Representative: Hooiveld, Arjen Jan Winfried
(86) International application number: PCT/NL2003/000828
(87) International publication number: WO 2004/048835

(56) References cited:
- FR-A- 1 520 734
- US-A- 5 145 220

## Description

The invention relates to a pipe coupling for joining a pipe to a coupling piece, wherein one end of the pipe extends into a cylindrical hole of the coupling piece and a flexible sealing ring is provided between the pipe and the coupling piece in a chamber formed in said hole, and wherein a clamping member having a cylindrical gripping surface engages the pipe.

Such a pipe coupling is known from International (PCT) patent publication No. WO96/26382 to the present applicant. This known pipe coupling comprises a clamping member of two identical shell parts made of plate metal, which parts jointly form the cylindrical gripping surface as well as a radially inwardly extending edge. Said edge engages behind a part of the coupling piece, which part is provided by forming an external, annular chamber in the coupling piece, into which said edge can extend. The clamping member - and thus the pipe - is secured against axial movement with respect to the coupling piece on the one hand in that the edge of the shell members extends into the external annular chamber and on the other hand in that the shell parts are firmly clamped down around the pipe. This latter engagement is achieved by drawing the shell members firmly together by tightening screw bolts.

The pipe coupling that is known from the aforesaid International (PCT) patent publication is quite satisfactory in practice. One drawback that is occasionally experienced is the fact that the shell members, in particular their common, radially inwardly extending edge, must be carefully cut from plate material in order to obtain the correct shape.

The object of the invention is to further improve the known pipe coupling in the sense that the clamping member can be produced in a simpler and thus more reliable manner.

According to the invention, a pipe coupling of the kind referred to in the introduction is to that end characterized in that the clamping member engages behind a radially extending stop surface of the coupling piece with at least one radially outwardly extending edge, said radially extending stop surface of the coupling piece being made up of a through hole of the coupling piece, into which the edge of the clamping member is inserted. This makes it possible to fold said edge outwardly once in a simple and reliable manner, in particular by bending or cutting, so as to enable the edge to engage behind the radially extending stop surface of the coupling piece. The edge forms a (part of a) flange or collar on the clamping member, as it were. The present pipe coupling allows repeated mounting and dismounting, whilst a large clamping force can be exerted in axial direction between the pipe and the coupling piece. The clamping member - and thus the pipe - is locked against axial movement with respect to the coupling piece, and also against rotation about a longitudinal axis of the pipe. After all, the clamping member is locked against rotation about the aforesaid longitudinal axis by inserting the outwardly extending edge of the clamping member into the through hole of the coupling piece. The pipe coupling that is known from the aforesaid International (PCT) patent publication does not provide such a locking engagement.

In one preferred embodiment of a pipe coupling according to the invention, the clamping member comprises two identical parts made of plate material, which jointly form the cylindrical clamping surface and which each comprise at least one radially outwardly extending edge. More in particular, two radially outwardly extending edges are provided in all, with the edge of one shell member being positioned directly opposite the edge of the other shell member. The construction is a mirror-symmetrical construction, therefore, which extends along a plane of symmetry located centrally between the shell members in the longitudinal axis of the pipe.

In another preferred embodiment of a pipe coupling according to the invention, the radially extending stop surface is positioned closer to an open side of the cylindrical hole of the coupling piece than the chamber formed in said hole. As a result, the dimension of the clamping member in radial direction is relatively small, since the clamping member does not need to extend around the coupling piece at the location where the coupling piece is provided with the aforesaid chamber for the sealing ring. This makes it possible to realise a small difference between the inside diameter and the outside diameter of the clamping member, which simplifies the manufacture thereof.

In another preferred embodiment of a pipe coupling according to the invention, separate fixing means are provided around the part of the clamping member that forms the cylindrical gripping surface.

The invention furthermore relates to a method for joining a pipe to a coupling piece, in which one end of the pipe is inserted into a cylindrical hole of the coupling piece and a flexible sealing ring is provided between the pipe and the coupling piece, in a chamber formed in said hole, and in which a clamping member having a cylindrical gripping surface which engages the coupling piece is subsequently arranged around a part of the pipe and around an adjacent part of the coupling piece, characterized in that the clamping member engages behind a radially extending stop surface of the coupling piece with at least one radially outwardly extending edge.

German patent publication No. 38 01 149 (Nussbaum) describes a multi-part coupling for joining a pipe to a coupling piece. Said known pipe coupling employs an O-ring present in the coupling piece, which can be compressed by tightening a screwing ring. To that end, a sleeve having a fully circumferential flange is fitted between said 0-ring and said screwing ring. The screwing ring is provided with external screw thread, which mates with internal screw thread of the coupling piece, with the screwing ring being tightened by means of a special tool. The known coupling furthermore employs a clamping ring comprising a clamping screw, which clamping screw can be tightened by means of said special tool so as to connect the clamping ring to the coupling piece in a rotationally fixed manner.

US patent No. 5,145,220 (Burkholder) presents a pipe coupling for joining a section of pipe to a pipe coupling. Two semicircular clamping elements are positioned round the pipe, in such a manner that radially outwardly extending lugs of the clamping elements extend into interior recesses of the coupling piece. Subsequently, the clamping elements are clampingly interconnected round the pipe by means of bolts. In order to prevent rotation of the pipe and the coupling piece relative to each other as much as possible, wedges are placed into engagement with the pipe, using a hammer, with teeth of the wedges indenting into the material of the pipe.

French patent document No. 1,520,734 (Bacilhon) relates to the joining of a pipe to a coupling piece, wherein a clamping element is clamped round the pipe by means of a bolt. The clamping element is partially confined in an internal recess in the coupling piece.

None of the aforesaid three patent publications describing the prior art realises radial and axial locking of the pipe with respect, to the coupling piece, with the locking surface being obtained directly - without any additional processing after removal from the mould being required.

The invention will now be explained in more detail with reference to Figures illustrated in a drawing, in which:
- Figure 1 is a longitudinal sectional view of a pipe coupling according to the invention;
- Figure 2 is a perspective view of a clamping member as used in Figure 1; and
- Figure 3 is a perspective view of the coupling that is shown in Figure 1, which is used for joining a pipe to a valve housing.

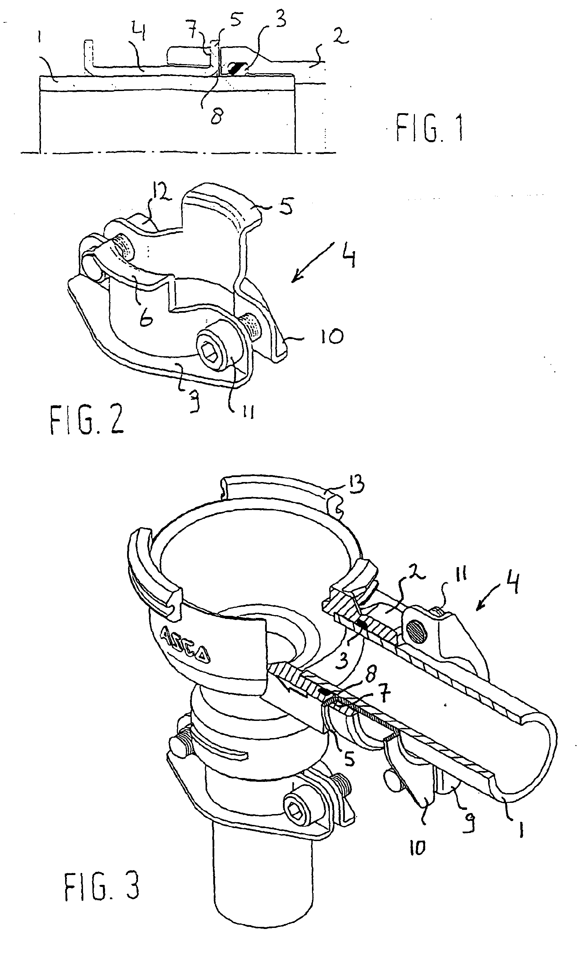

Figure 1 shows a part of a pipe 1, which extends into a coupling piece 2. The coupling piece is to that end provided with a hole whose diameter is slightly larger than the external diameter of the pipe 1.

The coupling piece 2 may form part of a valve housing (Figure 3), but the invention may also be used with any other element to which a pipe is to be joined.

Present in the hole of the coupling piece 2, into which the pipe 1 has been inserted, is an internal chamber in which a sealing ring 3 is present. The sealing ring 3 is an O-ring, for example, or another flexible ring which is capable of providing an adequate seal between the pipe 1 and the coupling piece 2. It is also possible to use other sealing means instead of a sealing ring 3, in which connection a sufficiently narrow tolerance between the pipe 1 and the coupling piece 2 may also be considered to form a seal.

Fitted round the pipe 1 is a clamping member 4, which likewise extends into the interior of the coupling piece 2. The clamping member 4 is provided with two radially outwardly extending edges 5,6, which each engage behind a radially extending stop surface 7 of the coupling piece 2. Said radially extending stop surfaces 7 are each made up of a slotted through hole 8 in the coupling piece 2, into which the respective edge 5,6 of the clamping member 4 is inserted.

Figure 2 shows the clamping member 4 of Figure 1 in perspective view, with corresponding to parts used in Figure 1 being designated by the same numerals. The clamping member 4 consists of two identical shell parts 9,10 of plate material, which are interconnected by means of bolts 11,12. The two bolts 11,12 are fixed in the shell parts 9,10 in question by means of screw thread, so that the shell parts 9,10 are drawn together by tightening the bolts 11, 12. Since the edges 5,6 are passed through the corresponding holes 7 of the coupling piece, the clamping member 4 - and thus the pipe 1 - is locked against rotation about the longitudinal axis of the pipe 1. Movement of the clamping member 4 - and thus of the pipe 1 - in axial direction is likewise impossible, since the clamping member 4 is on the one hand firmly clamped round the pipe 1, whilst on the other hand the edges 5,6 of the clamping member 4 abut against the stop surfaces 7. The edges 5,6 form flange members or collar members on the clamping member 4, as it were.

Figure 3 is a partially cut-away, perspective view of the coupling that is shown in Figure 1, which is used for joining a pipe to a valve housing 13. In this Figure, too, parts corresponding to parts shown in Figures 1 and 2 are designated by the same numerals.

It will be apparent that the pipe coupling described herein is of simple construction and is easy to fit, whilst the position of the coupling piece with respect to the pipe can be slightly varied in axial direction, with unrestricted rotational movement of the coupling piece about the longitudinal axis of the pipe being possible. After fitting, the present pipe coupling is locked against axial movement as well as against rotational movement with respect to the pipe and the coupling piece.

It is noted that the invention is not limited to the embodiments as described with reference to the Figures, but that it also extends to other variants that fall within the scope of the appended claims.

## Claims

1. A pipe coupling for joining a pipe (1) to a coupling piece (2), wherein one end of the pipe (1) extends into a cylindrical hole of the coupling piece (2) and a flexible sealing ring (3) is provided between the pipe (1) and the coupling piece (2) in a chamber formed in said hole, and wherein a clamping member (4) having a cylindrical gripping surface engages the pipe (1), **characterized in that** the clamping member (4) engages behind a radially extending stop surface (7) of the coupling piece (2) with at least one radially outwardly extending edge (5,6) forming a flange member on the clamping member (4), said radially extending stop surface (7) of the coupling piece (2) being made up of a through hole (8) of the coupling piece (2), into which the edge (5,6) of the clamping member (4) is inserted.

2. A pipe coupling according to claim 1, wherein the clamping member (4) comprises two identical parts (9, 10) made of plate material, which jointly form the cylindrical clamping surface and which each comprise at least one radially outwardly extending edge (5,6).

3. A pipe coupling according to claim 1 or 2, wherein the radially extending stop surface (7) is positioned closer to an open side of the cylindrical hole of the coupling piece (2) than the chamber formed in said hole.

4. A pipe coupling according to claim 1, 2 or 3, wherein separate fixing means (11,12) are provided around the part of the clamping member (4) that forms the cylindrical gripping surface.

5. A method for joining a pipe (1) to a coupling piece (2), in which one end of the pipe (1) is inserted into a cylindrical hole of the coupling piece (2) and a flexible sealing ring (3) is provided between the pipe (1) and the coupling piece (2), in a chamber formed in said hole, and in which a clamping member (4) having a cylindrical gripping surface which engages the coupling piece (2) is subsequently arranged around a part of the pipe (1) and around an adjacent part of the coupling piece (2), **characterized in that** the clamping member (4) engages behind a radially extending stop surface (7) of the coupling piece (2) with at least one radially outwardly extending edge (5,6) forming a flange member on the clamping member (4), said radially extending stop surface (7) of the coupling piece (2) being made up of a through hole (8) of the coupling piece (2), into which the edge (5,6) of the clamping member (4) is inserted.

## Patentansprüche

1. Rohrkupplung zum Verbinden eines Rohrs (1) mit einem Kupplungsstück (2), wobei ein Ende des Rohrs (1) sich in eine zylindrische Öffnung des Kupplungsstücks (2) hinein erstreckt und ein flexibler Dichtungsring (3) zwischen dem Rohr (1) und dem Kupplungsstück (2) in einer Kammer, die in der genannten Öffnung gebildet ist, angeordnet ist, und wobei ein Klemmteil (4), welches mit einer zylindrischen Greiffläche versehen ist, mit dem Rohr (1) in Eingriff steht, **dadurch gekennzeichnet, daß** das Klemmteil (4) hinter eine sich in radialer Richtung erstreckende Anschlagfläche (7) des Kupplungsstücks (2) mit zumindest einem sich in radialer Richtung nach außen erstreckenden Rand (5, 6) erstreckt, der ein Flanschteil auf dem Klemmteil (4) bildet, wobei die sich in radialer Richtung erstreckende Anschlagfläche (7) des Kupplungsstücks (2) aus einer durchgehenden Öffnung (8) des Kupplungsstücks (2) gebildet ist, in die der Rand (5, 6) des Klemmteils (4) eingesetzt ist.

2. Rohrkupplung nach Anspruch 1, **dadurch gekennzeichnet, daß** das Kupplungsstück (4) zwei identische Teile (9, 10) aufweist, die aus plattenförmigem Material hergestellt sind, und die gemeinsam die zylindrische Klemmoberfläche bilden und die jeweils zumindest einen sich in radialer Richtung nach außen erstreckenden Rand (5, 6) aufweisen.

3. Rohrkupplung nach Anspruch 1 oder 2, **dadurch gekennzeichnet, daß** die sich in radialer Richtung erstreckende Anschlagfläche (7) näher an einer offenen Seite der zylindrischen Öffnung des Kupplungsstücks (2) angeordnet ist, als die Kammer, die in der genannten Öffnung ausgebildet ist.

4. Rohrkupplung nach einem der Ansprüche 1, 2 oder 3, **dadurch gekennzeichnet, daß** getrennte Befestigungsmittel (11, 12) um den Teil des Klemmteils (4) herum vorgesehen sind, der die zylindrische Greiffläche bildet.

5. Verfahren zum Verbinden eines Rohrs (1) mit einem Kupplungsstück (2), bei dem ein Ende des Rohrs (1) in eine zylindrische Öffnung des Kupplungsstücks (2) eingesetzt wird und ein flexibler Dichtungsring (3) zwischen dem Rohr (1) und dem Kupplungsstück (2) vorgesehen ist, in einer Kammer, die in der genannten Öffnung ausgebildet ist, und bei dem ein Klemmteil (4), welches eine zylindrische Greiffläche aufweist, die mit dem Kupplungsstück (2) zusammenwirkt, anschließend um einen Teil des Rohrs (1) und um einen benachbarten Teil des Kupplungsstücks (2) herum angeordnet wird, **dadurch gekennzeichnet, daß** das Klemmteil (4) hinter eine sich in radialer Richtung erstreckende Anschlagfläche (7) des Kupplungsstücks (2) mit zumindest einem sich in radialer Richtung nach außen erstreckenden Rand (5, 6) greift, der ein Flanschteil auf dem Klemmteil (4) bildet, wobei die sich in radialer Richtung erstreckende Anschlagfläche (7) des Kupplungsstücks (2) durch eine durchgehende Öffnung (8) des Kupplungsstücks (2) gebildet ist, in die der Rand (5, 6) des Klemmteils (4) eingesetzt ist.

## Revendications

1. Raccord de tube destiné à raccorder un tube (1) à une pièce de raccordement (2), dans lequel une première extrémité du tube (1) s'étend dans un trou cylindrique de la pièce de raccordement (2) et une bague souple d'étanchéité (3) est logée entre le tube (1) et la pièce de raccordement (2) dans une chambre formée dans le trou, et dans lequel un organe de serrage (4) ayant une surface cylindrique de saisie coopère avec le tube (1), **caractérisé en ce que** l'organe de serrage (4) est en coopération derrière une surface d'arrêt (7) s'étendant radialement et appartenant à la pièce de raccordement (2) avec au moins un bord (5, 6) qui s'étend radialement vers l'extérieur et forme un organe de flasque sur l'organe de serrage (4), la surface d'arrêt s'étendant radialement (7) appartenant à la pièce de raccordement (2) étant formée par un trou débouchant (8) de la pièce de raccordement (2) dans lequel est inséré le bord (5, 6) de l'organe de serrage (4).

2. Raccord de tube selon la revendication 1, dans lequel l'organe de serrage (4) comprend deux parties identiques (9, 10) formées d'un matériau en forme de plaque, qui forment ensemble la surface cylindrique de serrage et qui comportent chacune au moins un bord s'étendant radialement vers l'extérieur (5, 6).

3. Raccord de tube selon la revendication 1 ou 2, dans lequel la surface d'arrêt s'étendant radialement (7) est disposée plus près d'un côté ouvert du trou cylindrique de la pièce de raccordement (2) que de la chambre formée dans le trou.

4. Raccord de tube selon la revendication 1, 2 ou 3, dans lequel un dispositif séparé de fixation (11, 12) est disposé autour de la partie de l'organe de serrage (4) qui forme la surface cylindrique de saisie.

5. Procédé de raccordement d'un tube (1) à une pièce de raccordement (2), dans lequel une première extrémité du tube (1) est insérée dans un trou cylindrique de la pièce de raccordement (2) et une bague souple d'étanchéité (3) est disposée entre le tube (1) et la pièce de raccordement (2), dans une chambre formée dans le trou, et dans lequel un organe de serrage (4) ayant une surface cylindrique de saisie qui coopère avec la pièce de raccordement (2) est ensuite disposé autour d'une partie du tube (1) et autour d'une partie adjacente de la pièce de raccordement (2), **caractérisé en ce que** l'organe de serrage (4) coopère derrière une surface d'arrêt s'étendant radialement (7) depuis la pièce de raccordement (2) avec au moins un bord qui s'étend radialement vers l'extérieur (5, 6) en formant un organe de flasque sur l'organe de serrage (4), la surface d'arrêt s'étendant radialement (7) depuis la pièce de raccordement (2) étant formée par un trou débouchant (8) de la pièce de raccordement (2) dans lequel est inséré le bord (5, 6) de l'organe de serrage (4).
